# EUROPÄISCHE PATENTSCHRIFT

(11) **EP 1 120 683 B1**
(45) Veröffentlichungstag und Bekanntmachung des Hinweises auf die Patenterteilung: **11.08.2004**
(21) Anmeldenummer: 00101773.0
(22) Anmeldetag: 28.01.2000
(51) Int. Cl.: G03B 21/26, G03B 31/04, G03B 31/06, H04N 9/80, G11B 27/10

(54) **Verfahren und Vorrichtung zur synchronisierten Abgabe von Bildinformationen und bildbezogenen Informationen**
Method of and device for output of image information synchronised with image-related information
Procédé et dispositif de restitution d'images synchronisée avec informations liées à ces images

(43) Veröffentlichungstag der Anmeldung: 01.08.2001
(73) Patentinhaber: Lehmann, Gerhard, 12359 Berlin (DE)
(72) Erfinder: Lehmann, Gerhard, 12359 Berlin (DE)
(74) Vertreter: von Hellfeld, Axel, Dr. Dipl.-Phys.

(56) Entgegenhaltungen:
- DE-A- 19 713 490
- FR-A- 2 686 986
- NL-A- 8 800 202
- US-A- 5 471 239
- PATENT ABSTRACTS OF JAPAN vol. 1998, no. 03, 27. Februar 1998 (1998-02-27) -& JP 09 304836 A (ATENE FR), 28. November 1997 (1997-11-28) & HORI SABURO: "Caption projection device" [Online] , JPO , JAPAN Computer-translation of JP 09-304836 A Retrieved from the Internet: <URL: http://www4.ipdl.jpo-miti.go.jp/cgi-bin/tr an_web_cgi_ejje?N0000=60&N0120=01&N2001=2& N3001=H09-304836http://www4.ipdl.jpo-miti. go.jp/cgi-bin/tran_web_cgi_ejje?N0000=60&N 0120=01&N2001=2&N3001=H09-304836> [retrieved on 2000-07-05]

## Beschreibung

Die Erfindung betrifft ein Verfahren und eine Vorrichtung zur Synchronisation der Abgabe von bildbezogenen Informationen mit der Abgabe einer Abfolge von Bildinformationen.

Eine Reihe unterschiedlicher Anwendungen erfordert die synchronisierte Abgabe von Bildinformationen und bildbezogenen Informationen. So ist es beispielsweise bei der Darstellung von Bildinformationen in Form eines Kinofilmes oder einer Diavorführung häufig notwendig, synchron mit dem Beginn des Sprechvorganges einer handelnden Person oder einem Diawechsel bildbezogene Informationen wie Untertitel oder eine musikalische Untermalung anzuzeigen oder zu ändern.

Untertitel und Texte werden auf Filmkopien und Video- oder Dia-Materialien häufig durch Einbrennen oder Einkopieren des Untertitels oder des Textes aufgebracht. Insbesondere bei Leihkopien und Einzelvorführungen ist das Einkopieren oder das Aufbringen der Untertitel oder Texte jedoch unerwünscht.

Es wurde daher vorgeschlagen, die Darstellung der Untertitel oder Texte von der Vorführung der Filmkopien, Videos oder Dias zu trennen. Eine genaue Synchronisation zwischen beispielsweise einem Projektor für einen Kinofilm und einem Untertitelprojektor ist jedoch äußerst schwierig, da üblicherweise mehrere Akte des Kinofilmes zu einer großen Rolle zusammengeschnitten werden. Dabei kommt es häufig vor, daß einzelne Bilder herausgeschnitten werden, so daß sich der Film um einige Sekunden verkürzt. Wenn nun der Filmprojektor und der Untertitelprojektor unabhängig voneinander laufen, tritt häufig das Problem auf, daß die Untertitel nicht mehr synchron mit dem Beginn des Sprechvorganges einer handelnden Person angezeigt werden. Dies wird vom Filmpublikum als äußerst störend empfunden.

Vergleichbare Probleme können bei der Vorführung von Videoprogrammen, Overhead-Projektionen oder Diavorführungen auftreten, wenn zusätzlich zu den Bildinformationen getrennte, bildbezogene Informationen bildsynchron abgespielt werden sollen.

Aus der DE 197 13 490 A1 sind ein Verfahren und eine Vorrichtung zur Untertitelung von Videosequenzen bekannt. Im Rahmen der Untertitelung von Videosequenzen wird einem vorbestimmten Bildinhalt ein bestimmter Untertitel zugeordnet und beim Erfassen des vorbestimmten Bildinhalts der zugeordnete Untertitel abgespielt. Die Abgabe des Untertitels erfolgt synchron mit dem Erfassen des vorbestimmten Bildinhalts.

Die JP 09 304836 A lehrt ein Projektionsverfahren, bei dem mittels eines ersten Projektionsgeräts eine Abfolge von Bildinformationen abgegeben wird und mittels eines zweiten Projektionsgeräts Untertitel in die Bildinformationen eingeblendet werden.

Der Erfindung liegt die Aufgabe zugrunde, ein Verfahren, ein Computerprogrammprodukt und eine Vorrichtung zur Synchronisation der Abgabe von bildbezogenen Informationen mit der Abgabe einer Abfolge von Bildinformationen anzugeben, bei dem die bildbezogenen Informationen nicht körperlich mit den Bildinformationen verbunden werden müssen. Es sollen eine weitestgehend bildgenaue Synchronisation von bildbezogenen Informationen und Bildinformationen und eine hohe Flexibilität in bezug auf die Abgabe der bildbezogenen Informationen gewährleistet werden.

Diese Aufgabe wird gelöst durch ein Verfahren gemäß Anspruch 1, ein Computerprogrammprodukt gemäß Anspruch 16 und eine Vorrichtung gemäß Anspruch 18. Die jeweiligen Unteransprüche betreffen vorteilhafte Ausgestaltungen und Weiterbildungen der Erfindung.

Zur Synchronisation der Abgabe von bildbezogenen Informationen mit der Abgabe einer Abfolge von Bildinformationen wird vorgeschlagen, zunächst Daten über abrupte Bildinhaltsänderungen aufeinanderfolgender Bildinformationen und über Zeitpunkte für die Abgabe der bildbezogenen Informationen bereitzustellen, die Abfolge der Bildinformationen zur Feststellung einer abrupten Bildinhaltsänderung zu überwachen und schließlich die bildbezogenen Informationen in zeitlicher Abhängigkeit von der festgestellten abrupten Bildinhaltsänderung abzugeben.

Nachfolgend werden die Begriffe Szenenwechsel und abrupte Änderung von Bildinhalten aufeinanderfolgender Bildinformationen synonym verwendet. Beispielsweise kann eine geänderte Kameraeinstellung oder eine neue Overhead-Folie einen Szenenwechsel beinhalten. Die erfindungsgemäße diskontinuierliche Synchronisation bei einzelnen Szenenwechseln gewährleistet, daß auch dann, wenn bildbezogene Informationen und Bildinformationen nicht körperlich miteinander verbunden sind, bildbezogene Informationen und Bildinformationen stets synchron abgegeben werden.

Erfindungsgemäß können die Bildinformationen sowohl in Form analoger oder digitaler elektronischer Signale als auch beispielsweise in Form von z. B. auf einem Bildschirm oder einer Leinwand wiedergegebenen Bildern verarbeitet werden. Die Abfolge von Bildinformationen kann sowohl eine Abfolge von bewegten Bildinformationen wie Kinofilmen, Videoprogrammen usw. als auch eine Abfolge von stehenden Bildinformationen wie Overhead-Projektionen, Dias, usw. beinhalten. Als bildbezogene Informationen können alle in Zusammenhang mit den Bildinformationen stehenden Ton-, Bild- oder Textinformationen abgegeben werden. Vorzugsweise werden jedoch Textinformationen wie Untertitel in digitaler oder analoger, elektronischer, optischer oder akustischer Form abgegeben.

Die bereitgestellten Daten über einzelne ausgewählte oder alle Szenenwechsel in der Bildinformationsabfolge können unterschiedliche Informationen enthalten. Basierend auf den in den bereitgestellten Daten über Szenenwechsel enthaltenen Informationen wird die Synchronisation vorgenommen.

Gemäß einer ersten Ausführungsform enthalten die Daten über Szenenwechsel solche Informationen, welche eine eindeutige Identifikation eines bestimmten Szenenwechsels und damit die Unterscheidung verschiedener Szenenwechsel gestatten. In diesem Fall können die Zeitpunkte für die Abgabe von bildbezogenen Informationen bezogen auf ausgewählte Szenenwechsel bereitgestellt werden. Wird anschließend bei der Überwachung der Bildinformationsabfolge ein bestimmter Szenenwechsel identifiziert, so werden die bereitgestellten und diesem Szenenwechsel zugeordneten bildbezogenen Informationen ausgewählt und gemäß den bereitgestellten Zeitpunkten in zeitlicher Abhängigkeit von dem Auftreten des Szenenwechsels abgegeben. Dieser Vorgang wiederholt sich, sobald ein neuer Szenenwechsel festgestellt wird.

Ein Szenenwechsel kann beispielsweise mittels einer Kamera und eines bildverarbeitenden Rechners derart festgestellt werden, daß die Bildfolge aufgenommen und mittels des Rechners in einer Mehrzahl von bestimmten, vorgegebenen Bildpunkten Farb- und/oder Helligkeitsänderungen festgestellt werden. Entsprechen die festgestellten Änderungen in diesen Bildpunkten dem (vorab festgelegten) gesuchten Szenenwechsel, ist dieser gefunden.

Gemäß einer zweiten Ausführungsform, welche mit der vorstehend beschriebenen Ausführungsform kombinierbar ist, enthalten die Daten über Szenenwechsel Informationen über vorher festgelegte Zeitpunkte für das Auftreten einzelner ausgewählter oder sämtlicher Szenenwechsel. Beim Feststellen eines Szenenwechsels werden zusätzlich Daten über den Zeitpunkt für das Auftreten dieses Szenenwechsels erfaßt und mit den bereitgestellten Daten über den festgelegten Zeitpunkt für das Auftreten des Szenenwechsels verglichen. Wird bei dem Vergleich beispielsweise festgestellt, daß der festgestellte Szenenwechsel früher als geplant, d. h. als in den bereitgestellten Daten über den Szenenwechsel vorgesehen, auftritt, so werden nachfolgend die bildbezogenen Informationen zu entsprechend geänderten Zeitpunkten abgegeben. Vorteilhafterweise werden weiterhin die bereitgestellten Daten über die Zeitpunkte der Abgabe von noch abzugebenden bildbezogenen Informationen ebenfalls entsprechend geändert.

Während die vorstehend beschriebene erste Ausführungsform erfordert, daß ein bestimmter Szenenwechsel eindeutig identifiziert wird, da die Zeitpunkte für die Abgabe der bildbezogenen Informationen bezogen auf eindeutig identifizierbare Szenenwechsel bereitgestellt werden, ist dies bei der zweiten Ausführungsform nicht der Fall. Bei der zweiten Ausführungsform ist es vielmehr ausreichend, die Tatsache eines Szenenwechsels festzustellen, ohne daß der Szenenwechsel eindeutig identifiziert werden müßte. Die Zeitpunkte für die Abgabe von bildbezogenen Informationen werden nämlich vorteilhafterweise bezogen auf den Beginn der Abgabe der Informationsabfolge bereitgestellt. Die Abgabe der bildbezogenen Informationen erfolgt dann gemäß der zweiten Ausführungsform derart in zeitlicher Abhängigkeit von dem festgestellten Szenenwechsel, daß der tatsächliche Zeitpunkt der Abgabe der bildbezogenen Informationen von dem bereitgestellten und vorher festgelegten Zeitpunkt dann abweicht, wenn der Zeitpunkt des Auftretens des festgestellten Szenenwechseln nicht mit dem vorher festgelegten Zeitpunkt für das Auftreten des entsprechenden Szenenwechsel übereinstimmt.

Bei allen Ausführungsformen können die bereitgestellten oder erfaßten Daten über Zeitpunkte für das Auftreten von Szenenwechseln, über Zeitpunkte für die Abgabe von bildbezogenen Informationen usw. in unterschiedlichen Formaten vorliegen. So können die Daten in Form von Zeitintervallen wie Stunden, Minuten und Sekunden ab einem bestimmten Ereignis wie dem Start der Bildsignalabfolge oder dem Auftreten eines bestimmten Szenenwechsels verarbeitet werden. Eine andere Möglichkeit besteht darin, die Daten in Form bestimmter, mit der Abfolge der Bildinformationen in Zusammenhang stehender Ereignisse wie der Anzahl der abzugebenden oder bereits abgegebenen Bildinformationen zu verarbeiten.

Neben Daten über Szenenwechsel und über Zeitpunkte für die Abgabe von bildbezogenen Informationen können noch weitere Daten bereitgestellt werden. So kann insbesondere daran gedacht werden, nicht nur Daten über den Beginn der Abgabe der bildbezogenen Informationen, sondern auch Daten über das Ende der Abgabe der bildbezogenen Informationen bereitzustellen und erforderlichenfalls zu ändern. Wenn die bildbezogenen Informationen in Form von darzustellenden Texten vorliegen, kann daran gedacht werden, zusätzlich Daten über Position, Schriftart und Inhalt dieser Texte zur Verfügung zu stellen. Diese Daten können im voraus passend zu der Abfolge der Bildinformationen erstellt und in einer Datenbank abgelegt werden.

Gemäß einer bevorzugten Ausführungsform der Erfindung wird die Anzahl der bereits abgegebenen Bildinformationen erfaßt. Bei einem Kinoprojektor beispielsweise kann die Anzahl der durchgelaufenen Bilder durch Abtasten der Drehzahl des Projektorzahnkranzes berechnet werden. Bei Video- oder Dia-Programmen dagegen kann mit Hilfe des Time-Codes oder CTL-Codes die Anzahl der bereits gezeigten Bilder ermittelt werden.

Sofern die Anzahl der bereits abgegebenen Bildinformationen erfaßt wird, werden vorteilhafterweise auch die Daten über den vorher festgelegten Zeitpunkt eines Szenenwechsels bezogen auf die Anzahl abzugebender Bildinformationen bereitgestellt. Auch können die Daten über den Zeitpunkt eines tatsächlich aufgetretenen Szenenwechsels bezogen auf die Anzahl bereits abgegebener Bildinformationen von einem Detektorsystem erfaßt werden. In einer bevorzugten Ausführungsform der Erfindung werden die Daten über die Zeitpunkt der Abgabe und/oder das Ende der Abgabe der bildbezogenen Informationen ebenfalls bezogen auf die Anzahl abzugebender Bildinformationen bereitgestellt.

Gemäß einer weiteren Ausführungsform der Erfindung werden für jeden oder aber für bestimmte einzelne Szenenwechsel Daten über ein vorbestimmtes Zeitfenster bereitgestellt und ebenfalls in einer Datenbank abgelegt. Es läßt sich dann die Zuverlässigkeit der Synchronisation erhöhen, wenn das Detektorsystem derart gesteuert wird, daß eine Erfassung dieses Szenenwechsels nur innerhalb des Zeitfensters erfolgt. Außerhalb des Zeitfensters auftretende Szenenwechsel werden unterdrückt. Sofern innerhalb des Zeitfensters kein Szenenwechsel erfaßt wurde, wird einfach während des nächsten Zeitfenster auf die Erfassung des nächsten Szenenwechsels gewartet.

Gemäß einer bevorzugten Ausführungsform der Erfindung werden die Bildinformationen wie Kinofilme, Videoprogramme, Overhead- oder Dia-Vorführungen mit Hilfe eines Projektionsverfahrens z. B. auf einer Leinwand dargestellt. Sofern es sich bei den bildbezogenen Informationen um Bild- oder Textinformationen handelt, werden diese bevorzugt ebenfalls mit Hilfe eines Projektionsverfahrens und besonders bevorzugt innerhalb desjenigen projizierten Bildes, welches basierend auf den Bildinformationen generiert wurde, dargestellt. Sofern die Bildinformationen durch ein Projektionsverfahren dargestellt werden, können die projizierten Bildinformationen auf optischem Wege beispielsweise durch ein Kamerasystem aufgenommen und nachfolgend zur Erfassung eines Szenenwechsels elektronisch bearbeitet werden.

Weitere Einzelheiten und Vorteile der Erfindung ergeben sich aus den Ausführungsbeispielen und der Figur. Die Figur zeigt eine Vorrichtung zur synchronisierten Projektion eines Textes oder Untertitels in eine projizierten Bildabfolge.

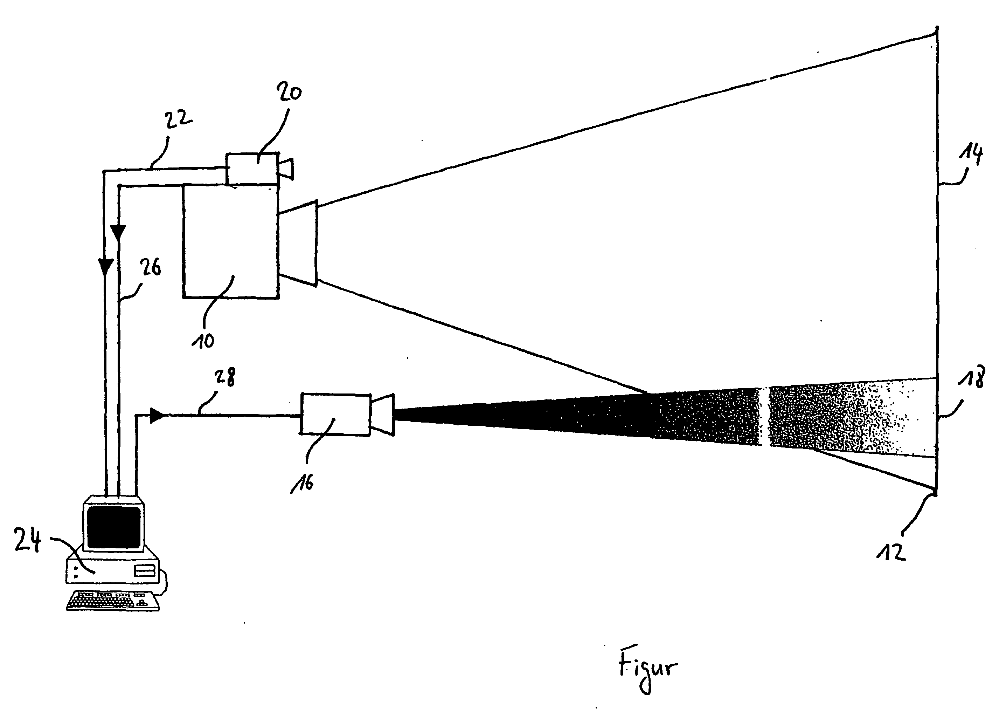

Die Vorrichtung umfaßt einen ersten Projektor 10, mit Hilfe dessen ein Kinofilm, ein Videoprogramm, eine Overhead-Vorlage oder eine Dia-Vorlage auf eine Leinwand 12 projiziert wird. Auf der Leinwand entsteht so ein Bild 14.

Die Vorrichtung umfaßt weiterhin einen zweiten Projektor 16, mit dessen Hilfe ein Text 18 innerhalb des Bereiches des Bildes 14 auf die Leinwand 12 projiziert wird.

Die Vorrichtung besitzt außerdem ein Detektorsystem mit einer Kamera 20, die das von dem ersten Projektor 10 auf die Leinwand 12 projizierte Bild 14 aufnimmt. Das von der Kamera 20 aufgenommene Bild wird elektronisch gewandelt und über eine Datenleitung 22 an einen Rechner 24 übertragen. Im Rechner 24 wird das Bildsignal von der Kamera 20 mit Hilfe einer entsprechenden Software bearbeitet, um einen Szenenwechsel zu erfassen. Wird vom Rechner 24, welcher Teil des Detektionssystems ist, ein Szenenwechsel erfaßt, so ermittelt der Rechner 24 gleichzeitig Daten über den Zeitpunkt dieses Szenenwechsels.

Zu diesem Zweck ist der Rechner 24 über eine Datenleitung 26 mit dem ersten Projektor 10 verbunden. Der erste Projektor 10 übermittelt über die Datenleitung 26 kontinuierlich Informationen über die Anzahl der bereits auf der Leinwand 12 dargestellten Bilder 14 an den Rechner 24. Sobald von der Software des Rechners 24 ein Szenenwechsel erkannt wird, wird diesem Szenenwechsel die über die Datenleitung 26 übertragene Information bezüglich der Anzahl der bereits abgegebenen Bilder 14 zugeordnet.

Gemäß einem ersten Ausführungsbeispiel ist in dem Rechner 24 eine Datenbank angeordnet, welche vorab abgespeicherte Daten enthält, die eine eindeutige Erkennung einzelner Szenenwechsel in der Bildinformationsabfolge erlauben. Die Datenbank enthält ferner Daten über den Zeitpunkt für die Abgabe der bildbezogenen Textinformationen bezogen auf das Auftreten eines bestimmten Szenenwechsels.

Nachdem vom Rechner 24 in den von der Kamera 20 über die Datenleitung 22 zur Verfügung gestellten Informationen ein bestimmter Szenenwechsel erkannt wird, werden in der Datenbank die diesem Szenenwechsel zugeordneten bildbezogenen Informationen ausgewählt. Anschließend werden diese ausgewählten bildbezogenen Informationen zu den entsprechenden, in der Datenbank bereitgestellten Zeitpunkten über eine Datenleitung 28 an den zweiten Projektor 16 abgegeben. Enthält die Datenbank beispielsweise die Information, daß bestimmte bildbezogene Textinformationen 50 Bilder nach einem bestimmten Szenenwechsel abzugeben sind, so werden rechnergesteuert nach dem Erkennen des betreffenden Szenenwechsels die zugehörigen bildbezogenen Textinformationen 50 Bilder nach dem Auftreten des Szenenwechsels an den zweiten Projektor 16 abgegeben und von diesem dargestellt.

Gemäß einem zweiten Ausführungsbeispiel ist in dem Rechner 24 eine Datenbank angeordnet, welche vorab abgespeicherte Daten über die geplanten Zeitpunkte für das Auftreten von Szenenwechseln in der Bildinformationsabfolge enthält. Die Daten können beispielsweise die Informationen erhalten, daß ein Szenenwechsel jeweils bei Bild 50, 1070 und 5130 auftritt. Nach dem Feststellen eines Szenenwechsels und der Daten über den Zeitpunkt des Auftretens des Szenenwechsels vergleicht der Rechner 24 die erfaßten Daten über den Zeitpunkt des Auftretens des Szenenwechsels mit den in der Datenbank bereitgestellten Daten über den vorab festgelegten Zeitpunkt für das Auftreten dieses Szenenwechsels. Die in dem Rechner 24 angelegte Datenbank enthält außerdem Daten über den Zeitpunkt für die Abgabe der bildbezogenen Textinformationen an den zweiten Projektor 16 sowie Daten über die Beendigung der Abgabe der bildbezogenen Informationen an den zweiten Projektor 16 und ferner Daten über Position, Schriftart und Inhalt des von dem zweiten Projektor 16 auf die Leinwand 12 projizierten Textes 18. Sobald beim Vergleich der erfaßten Daten über den Zeitpunkt des aufgetretenen Szenenwechsels mit den bereitgestellten Daten über den vorab festgelegten Zeitpunkt für das Auftreten dieses Szenenwechsels festgestellt wird, daß der tatsächliche Szenenwechsel beispielsweise zehn Bilder vor dem vorab festgelegten Szenenwechsel stattfindet, weil zehn Bilder herausgeschnitten wurden, werden die in der Datenbank abgelegten Daten über den Zeitpunkt für die nachfolgende Abgabe von bildbezogenen Textinformationen derart abgeändert, daß die bildbezogenen Textinformationen zehn Bilder früher als ursprünglich geplant von dem Rechner 24 über die Datenleitung 28 an den zweiten Projektor 16 abgegeben und von diesem dargestellt werden.

In beiden Ausführungsbeispielen wird sichergestellt, daß nach jedem erfaßten Szenenwechsel die bildbezogenen Informationen wieder synchron mit den Bildinformationen abgegeben werden. Gemäß dem zweiten Ausführungsbeispiel wird dazu gegebenenfalls der Zeitpunkt der Abgabe der bildbezogenen Informationen korrigiert. Es kann daher eine bildgenaue Synchronisation gewährleistet werden, ohne daß Untertitel oder Texte 18 unmittelbar auf Filmkopien aufgebracht oder in Video- oder Dia-Vorlagen einkopiert werden müßten.

Der Rechner 24 gestattet eine hohe Flexibilität bei der Darstellung von Untertiteln oder anderen Texten 18. Durch den Einsatz des Rechners 24 kann beispielsweise eine gute Lesbarkeit der Untertitel oder des Textes 18 auch auf weißem Hintergrund durch die Aufprojektion des Untertitels oder Textes 18 in verschiedenen Schriftarten, Schriftgrößen, Schriftformen und Schriftfarben auf das projizierte Bild 14 gewährleistet werden. Durch eine entsprechende Steuerung des zweiten Projektors 16 mit Hilfe des Rechners 24 können die Untertitel oder Texte 18 an jeder beliebigen Stelle innerhalb des projizierten Bildes 14 angeordnet werden.

Obwohl das obige Ausführungsbeispiel die Abgabe von bildbezogenen Textinformationen beschreibt, kann mit Hilfe des Rechners 24 über die Datenleitung 28 auch beispielsweise eine Vorrichtung zur Abgabe von bildbezogenen Toninformationen gesteuert werden. Sofern die vom Projektor 10 projizierten Bildinformationen in Form elektronischer Signale vorliegen, kann auf die Kamera 20 verzichtet werden und die vorhandenen elektronischen Signale unmittelbar im Hinblick auf das Auftreten eines Szenenwechsels analysiert werden.

## Patentansprüche

1. Verfahren zur Synchronisation der Abgabe von bildbezogenen Informationen mit der Abgabe einer Abfolge von Bildinformationen, enthaltend die Schritte:
- Bereitstellungeiner Datenbank (24) mit Daten über das Auftreten abrupter Bildinhaltsänderungen aufeinanderfolgender Bildinformationen und über diesen zugeordnete Zeitpunkte für die Abgabe von bildbezogenen Informationen;
- Überwachung der Abfolge der Bildinformationen mit einem Detektorsystem (20) zur Feststellungeiner abrupten Bildinhaltsänderung;
- Abgabe der bildbezogenen Informationen in zeitlicher Abhängigkeit von der festgestellten abrupten Bildinhaltsänderung.

2. Verfahren nach Anspruch 1,
**dadurch gekennzeichnet, daß** in den Daten über abrupte Bildinhaltsänderungen Informationen über vorher festgelegte Zeitpunkte für das Auftreten der abrupten Bildinhaltsänderungen enthalten sind.

3. Verfahren nach Anspruch 2,
**dadurch gekennzeichnet, daß** bei Feststellung einer abrupten Büdinhaltsänderung Daten über den Zeitpunkt des Auftretens dieser abrupten Bildinhaltsänderung erfaßt und mit den entsprechenden bereitgestellten Daten verglichen werden.

4. Verfahren nach Anspruch 3,
**dadurch gekennzeichnet, daß** die bildbezogenen Informationen zu entsprechend geänderten Zeitpunkten abgegeben werden, wenn beim Vergleichen eine Abweichung des festgelegten Zeitpunktes für das Auftreten der festgestellten abrupten Bildinhaltsänderung von dem erfaßten Zeitpunkt des Auftretens dieser abrupten Bildinhaltsänderung festgestellt wird.

5. Verfahren nach Anspruch 3 oder 4,
**dadurch gekennzeichnet, daß** bei Feststellung einer Abweichung in den bereitgestellten Daten die Zeitpunkte der Abgabe aller noch abzugebender bildbezogener Informationen entsprechend geändert werden.

6. Verfahren nach einem der Ansprüche 1 bis 5,
**dadurch gekennzeichnet, daß** die Daten über abrupte Bildinhaltsänderungen Informationen enthalten, die eine eindeutige Unterscheidung der einzelnen abrupten Bildinhaltsänderungen erlauben.

7. Verfahren nach Anspruch 6,
**dadurch gekennzeichnet, daß** die Zeitpunkte für die Abgabe von bildbezogenen Informationen bezogen auf das Auftreten ausgewählter abrupter Bildinhaltsänderungen bereitgestellt werden.

8. Verfahren nach einem der Ansprüche 1 bis 7,
**dadurch gekennzeichnet, daß** weiterhin Daten über das Ende der Abgabe der bildbezogenen Informationen bereitgestellt werden.

9. Verfahren nach einem der Ansprüche 1 bis 8,
**dadurch gekennzeichnet, daß** die Anzahl der bereits abgegebenen Bildinformationen erfaßt wird.

10. Verfahren nach einem der Ansprüche 1 bis 9,
**dadurch gekennzeichnet, daß** die Daten über den vorab festgelegten Zeitpunkt für das Auftreten einer abrupten Bildinhaltsänderung bezogen auf die Anzahl abzugebender Bildinformationen bereitgestellt und bezogen auf die Anzahl bereits abgegebener Bildinformationen erfaßt werden.

11. Verfahren nach einem der Anprüche 1 bis 10,
**dadurch gekennzeichnet, daß** die Daten über den Zeitpunkt der Abgabe und/oder das Ende der Abgabe der bildbezogenen Informationen bezogen auf die Anzahl abzugebender Bildinformationen bereitgestellt wird.

12. Verfahren nach einem der Ansprüche 1 bis 11,
**dadurch gekennzeichnet, daß** für jede abrupte Bildinhaltsänderung oder einzelne abrupte Bildinhaltsänderungen Daten über ein vorbestimmtes Zeitfenster bereitgestellt werden und die Feststellung einer abrupten Bildinhaltsänderung nur innerhalb des Zeitfensters erfolgt.

13. Verfahren nach einem der Ansprüche 1 bis 12,
**dadurch gekennzeichnet, daß** die Bildinformationen und/oder die bildbezogenen Informationen mit Hilfe eines Projektionsverfahrens dargestellt werden.

14. Verfahren nach Anspruch 13,
**dadurch gekennzeichnet, daß** die projizierten Bildinformationen auf optischem Wege aufgenommen und nachfolgend zur Feststellung einer abrupten Bildinhaltsänderung bearbeitet werden.

15. Verfahren nach einem der Ansprüche 1 bis 14,
**dadurch gekennzeichnet, daß** die bildbezogenen Informationen Textdaten enthalten und diese Textdaten innerhalb des projizierten Bildes dargestellt werden.

16. Computerprogrammprodukt mit Programmcodemitteln zum Durchführen des Verfahrens nach einem der Ansprüche 1 bis 15, wenn die Programmcodemittel auf einem Rechner (24) ausgeführt werden.

17. Computerprogrammprodukt nach Anspruch 16, gespeichert auf einem Datenträger.

18. Vorrichtung zur Synchronisation der Abgabe von bildbezogenen Informationen mit der Abgabe einer Abfolge von Bildinformationen, mit
- einer Datenbank (24) zur Bereitstellung von Daten über abrupte Bildinhaltsänderungen in der Bildinformationsabfolge und über Zeitpunkte für die Abgabe der bildbezogenen Informationen;
- einem Detektorsystem (20,24) zur Überwachung der Abfolge der Bildinformationen zur Feststellung einer abrupten Bildinhaltsänderung; und
- einem Rechner (24) zur Steuerung der Abgabe der bildbezogenen Informationen in zeitlicher Abhängigkeit von der festgestelltenabrupten Bildinhaltsänderung.

19. Vorrichtung nach Anspruch 18,
**dadurch gekennzeichnet, daß** die Vorrichtung einen ersten Projektor (10) zur Darstellung der Bildinformationen (14) und einen zweiten Projektor (16) zur Darstellung von bildbezogenen Textinformationen (18) umfaßt.

20. Vorrichtung nach Anspruch 19,
**dadurch gekennzeichnet, daß** das Detektorsystem (20,24) eine Kamera (20) zur Aufnahme der projizierten Bildinformationen (14) und einen Rechner (24) zur Bearbeitung der von der Kamera (20) aufgenommenen Bildinformationen zur Feststellung einer abrupten Bildinhaltsänderung umfaßt.

## Claims

1. Method for synchronising the output of image-related information with the output of a sequence of image information, including the steps of:
- providing a database (24) with data concerning the occurrence of abrupt image content changes of sequential image information and concerning times associated therewith for the output of image-related information;
- monitoring the sequence of image information by a detector system (20) for detecting an abrupt image content change;
- outputting the image-related information in temporal dependency upon the detected abrupt image content change.

2. Method according to claim 1,
**characterised in that** the data concerning abrupt image content changes comprise information on previously defined times for the occurrence of the abrupt image content changes.

3. Method according to claim 2,
**characterised in that** when an abrupt image content change is detected, data concerning the time of the occurrence of this abrupt image content change are detected and compared to the corresponding data that have been provided.

4. Method according to claim 3,
**characterised in that** the image-related information is output at appropriately amended times if in the course of the comparison a deviation of the defined time for the occurrence of the detected abrupt image content change from the detected time of the occurrence of this abrupt image content change is established.

5. Method according to claim 3 or 4,
**characterised in that** when a deviation is established, the times of the output of all image-related information yet to be output are amended accordingly in the provided data.

6. Method according to one of claims 1 to 5,
**characterised in that** the data concerning abrupt image content changes contain information permitting an unambiguous differentiation of the individual abrupt image content changes.

7. Method according to claim 6,
**characterised in that** the times for the output of image-related information are provided in a form related to the occurrence of selected abrupt image content changes.

8. Method according to one of claims 1 to 7,
**characterised in that** additional data concerning the end of the output of the image-related information are provided.

9. Method according to one of claims 1 to 8,
**characterised in that** the number of items of image information already output is detected.

10. Method according to one of claims 1 to 9,
**characterised in that** the data concerning the previously defined time for the occurrence of an abrupt image content change are provided in a form related to the number of items of image information to be output and are detected in a form related to the number of items of image information already output.

11. Method according to one of claims 1 to 10,
**characterised in that** the data concerning the time of the output and/or the end of the output of the image-related information is provided in a form related to the number of items of image information to be output.

12. Method according to one of claims 1 to 11,
**characterised in that** data concerning a predetermined time window are provided for each abrupt image content change or for individual abrupt image content changes, and an abrupt image content change is detected only within the time window.

13. Method according to one of claims 1 to 12,
**characterised in that** the image information and/or the image-related information are/is presented by way of a projection method.

14. Method according to claim 13,
**characterised in that** the projected image information is taken by optical means and subsequently processed in order to detect an abrupt image content change.

15. Method according to one of claims 1 to 14,
**characterised in that** the image-related information contains text data and these text data are presented within the projected image.

16. Computer program product with program code means for carrying out the method according to one of claims 1 to 15 when the program code means are executed on a computer (24).

17. Computer program product according to claim 16, stored on a data carrier.

18. Device for synchronising the output of image-related information with the output of a sequence of image information, comprising
- a database (24) for providing data concerning abrupt image content changes in the image information sequence and concerning times for the output of the image-related information;
- a detector system (20, 24) for monitoring the sequence of image information for detecting an abrupt image content change; and
- a computer (24) for controlling the output of the image-related information in temporal dependency upon the detected abrupt image content change.

19. Device according to claim 18,
**characterised in that** the device comprises a first projector (10) for presenting the image information (14) and a second projector (16) for presenting image-related text information (18).

20. Device according to claim 19,
**characterised in that** the detector system (20, 24) comprises a camera (20) for taking the projected image information (14) and a computer (24) for processing the image information taken by the camera (20) for detecting an abrupt image information change.

## Revendications

1. Procédé permettant la synchronisation du processus de restitution d'informations liées à des images avec le processus de restitution d'une séquence d'images, comprenant pour étapes :
- la mise à disposition d'une base de données (24) regroupant des données sur la survenance de changements abrupts du contenu d'images successives et sur les moments associés à ces changements pour la restitution d'informations liées à ces images ;
- la surveillance de la séquence d'images à l'aide d'un système détecteur (20) pour la détection d'un changement abrupt du contenu d'image ;
- la restitution des informations liées à des images en fonction de la survenance dans le temps du changement abrupt du contenu d'image détecté.

2. Procédé selon la revendication 1,
**caractérisé en ce que** les données sur les changements abrupts du contenu d'image contiennent des informations sur les moments préalablement déterminés pour la survenance des changements abrupts du contenu d'image.

3. Procédé selon la revendication 2,
**caractérisé en ce que**, lors de la détection d'un changement abrupt du contenu d'image, des données sur le moment de la survenance de ce changement sont saisies et comparées aux données correspondantes mises à disposition.

4. Procédé selon la revendication 3,
**caractérisé en ce que** les informations liées à des images sont restituées à des moments modifiés en conséquence lorsqu'un écart entre le moment déterminé pour la survenance du changement abrupt du contenu d'image détecté et le moment saisi pour la survenance de ce changement abrupt du contenu d'image est constaté lors du processus de comparaison.

5. Procédé selon la revendication 3 ou 4,
**caractérisé en ce que**, lors de la constatation d'un écart dans les données mises à disposition, les moments pour la restitution de toutes les informations liées aux images encore à restituer sont modifiés en conséquence.

6. Procédé selon l'une des revendications 1 à 5,
**caractérisé en ce que** les données sur les changements abrupts du contenu d'image contiennent des informations permettant une nette distinction entre les différents changements abrupts du contenu d'image.

7. Procédé selon la revendication 6,
**caractérisé en ce que** les moments pour la restitution des informations liées à des images sont mis à disposition suivant la survenance des changements abrupts et choisis du contenu d'image.

8. Procédé selon l'une des revendications 1 à 7,
**caractérisé en ce que** des données sur la fin de la restitution des informations liées à des images continuent à être mises à disposition.

9. Procédé selon l'une des revendications 1 à 8,
**caractérisé en ce que** le nombre des images déjà restituées est saisi.

10. Procédé selon l'une des revendications 1 à 9,
**caractérisé en ce que** les données sur le moment préalablement déterminé pour la survenance d'un changement abrupt du contenu d'image sont mises à disposition suivant le nombre des images à restituer et saisies suivant le nombre des images déjà restituées.

11. Procédé selon l'une des revendications 1 à 10,
**caractérisé en ce que** les données sur le moment de la restitution et/ou de la fin de la restitution des informations liées à des images sont mises à disposition suivant le nombre des images à restituer.

12. Procédé selon l'une des revendications 1 à 11,
**caractérisé en ce que** des données sont mises à disposition pendant un intervalle de temps prédéterminé pour chaque changement abrupt du contenu d'image ou pour les différents changements abrupts du contenu d'image, et **en ce que** la détection d'un changement abrupt du contenu d'image s'effectue uniquement dans cet intervalle de temps.

13. Procédé selon l'une des revendications 1 à 12,
**caractérisé en ce que** les images et/ou les informations liées à ces images sont représentées à l'aide d'un procédé de projection.

14. Procédé selon la revendication 13,
**caractérisé en ce que** les images projetées sont enregistrées par voie optique et sont ensuite traitées pour la détection d'un changement abrupt du contenu d'image.

15. Procédé selon l'une des revendications 1 à 14,
**caractérisé en ce que** les informations liées à des images contiennent des données texte et que ces données texte sont représentées à l'intérieur de l'image projetée.

16. Programme d'ordinateur avec moyens de programmation par codes pour l'exécution du procédé selon l'une des revendications 1 à 15 lorsque lesdits moyens sont mis en oeuvre sur un ordinateur (24).

17. Programme d'ordinateur selon la revendication 16, enregistré sur un support de données.

18. Dispositif pour la synchronisation du processus de restitution d'informations liées à des images avec le processus de restitution d'une séquence d'images, comprenant
- une base de données (24) pour la mise à disposition de données sur les changements abrupts du contenu d'image à l'intérieur de la séquence d'images et sur les moments pour la restitution des informations liées à ces images ;
- un système détecteur (20, 24) pour la surveillance de la séquence d'images pour la détection d'un changement abrupt du contenu d'image ; et
- un ordinateur (24) pour la commande de la restitution des informations liées à des images en fonction de la survenance dans le temps du changement abrupt du contenu d'image détecté.

19. Dispositif selon la revendication 18,
**caractérisé en ce que** le dispositif comprend un premier projecteur (10) pour la représentation des images (14) et un second projecteur (16) pour la représentation des informations texte (18) liées à ces images.

20. Dispositif selon la revendication 19,
**caractérisé en ce que** le système détecteur (20, 24) comprend une caméra (20) pour l'enregistrement des images projetées (14) et un ordinateur (24) pour le traitement des images enregistrées par la caméra (20) pour la détection d'un changement abrupt du contenu d'image.
